(19) **Europäisches Patentamt / European Patent Office / Office européen des brevets**

(11) **EP 0 944 213 B1**

(12) **EUROPEAN PATENT SPECIFICATION**

(45) Date of publication and mention
of the grant of the patent:
**25.11.2009 Bulletin 2009/48**

(51) Int Cl.:
***H03J 7/18*** *(2006.01)* ***H04L 27/26*** *(2006.01)*

(21) Application number: **99105274.7**

(22) Date of filing: **15.03.1999**

(54) **Digital broadcast receiver**

Empfänger für digitalen Rundfunk

Recépteur pour diffusion numérique

(84) Designated Contracting States:
**DE FR GB**

(30) Priority: **18.03.1998 JP 9082198**

(43) Date of publication of application:
**22.09.1999 Bulletin 1999/38**

(73) Proprietor: **Kabushiki Kaisha Kenwood
Hachiouji-shi,
Tokyo 192-8525 (JP)**

(72) Inventor: **Katsumoto, Hiroshi
Hachiouji-shi,
Tokyo 192-0045 (JP)**

(74) Representative: **Leinweber & Zimmermann
European Patent Attorneys
Patentanwälte
Rosental 7
80331 München (DE)**

(56) References cited:
EP-A- 0 786 889    WO-A-97/39527
DE-A- 19 721 864

- **ROMANOWSKI A ET AL: "Concept of a multistandard receiver for digital broadcast and communication services" , 1997 INTERNATIONAL CONFERENCE ON CONSUMER ELECTRONICS, ROSEMONT, IL, USA, 11-13 JUNE 1997 , IEEE TRANSACTIONS ON CONSUMER ELECTRONICS, AUG. 1997, IEEE, USA, PAGE(S) 662 - 670 XP010250064 ISSN: 0098-3063**

**Description**

BACKGROUND OF THE INVENTION

1. Field of the Invention

The present invention relates to a digital broadcast receiver, and more particularly to a digital broadcast receiver with a seek function of the type that when a seek is instructed, a plurality of digital broadcast frequencies are sequentially tuned in, and when a receivable digital broadcast station is found, the seek operation is terminated.

2. Description of the Related Art

In Europe, so-called digital audio broadcasting (DAB) is prevailing in practice. DAB uses orthogonal frequency division multiplex (OFDM) which is one kind of multicarrier modulation methods. Each transmission symbol is constituted of a guard interval and an effective symbol to thereby allow reception highly resistant to ghosts. Each carrier of DAB is DQPSK modulated.

DAB uses three bands: band II (87 to 108 MHz band), band III (175 to 250 MHz band), and L band (1.452 to 1.492 GHz band). The band II and III utilize a transmission mode 1 having a transmission frame period of 96 ms and a carrier interval of 1 kHz. The transmission mode 1 is highly resistant to multi-path and suitable for a single frequency network (SFN), and is limited to only for use with the bands II and III. The L band utilizes transmission modes 2, 3, and 4. The transmission mode 2 has a frame period of 24 ms and a carrier interval of 4 kHz and is suitable for mobil reception. The transmission mode 3 has a frame period of 24 ms and a carrier interval of 8 kHz and is suitable for satellite broadcast or the like. The transmission mode 4 has a frame period of 48 ms and a carrier interval of 2 kHz.

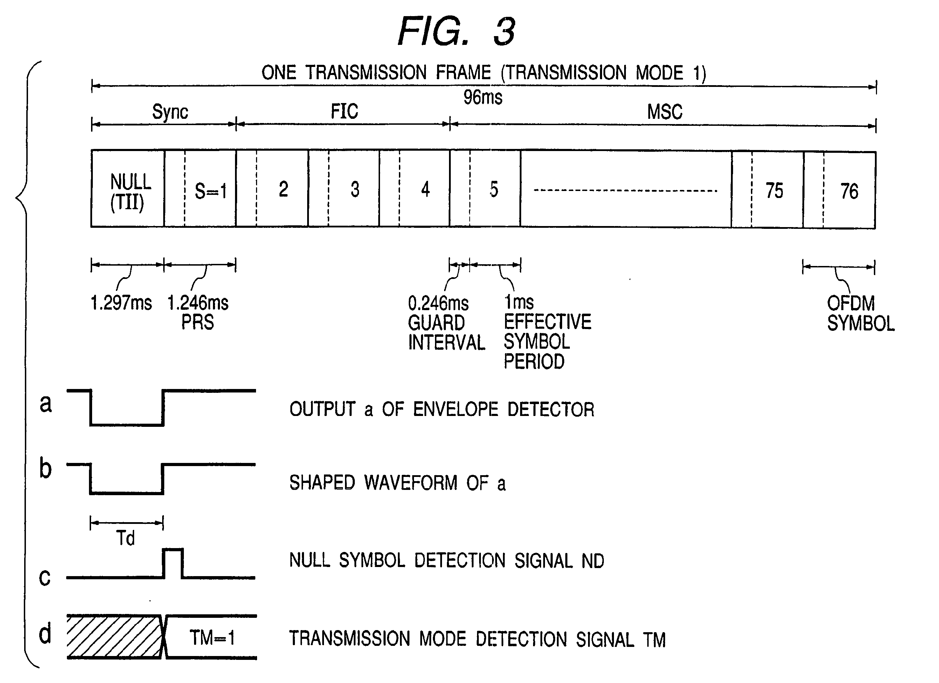

The format of a transmission frame signal in the transmission mode 1 of DAB is shown in the upper portion of Fig. 3. There are a sync signal constituted of a NULL symbol of 1.297 ms and a phase reference symbol (PRS: Phase Reference Symbol) in the initial field, and seventy five OFDM symbols each of 1.246 ms in the following fields. Symbols other than the NULL symbol are transmission symbols. A start period of 0.246 ms of each transmission symbol constitutes a guard interval, and the remaining period of 1 ms constitutes an effective symbol.

The transmission symbol of S = 1 is PRS used for AFC (Automatic Frequency Control) or the like, PRS being obtained through adjacent inter-carrier differential modulation of a predetermined and specific code (called a CAZAC (Constant Amplitude Zero Auto Correlation) code). The transmission symbols of S = 2 to 4 are FIC's (Fast Information Channels) for transmission of information necessary for a receiver to tune in to a desired program, auxiliary information for a program, and the like. The transmission symbols of S = 7 to 76 are MSC's (Main Service Channels) for transmission of multiplexed sub-channels of voices and data. Generally, one sub-channel corresponds to one program. Information on how sub-channels are multiplexed in MSC is contained in FIC. Therefore, by referring to FIC, a sub-channel of a program desired by a user can be located.

In the transmission mode 2, each symbol period shown in Fig. 3 is shortened by 1/4. In the transmission mode 3, each symbol period shown in Fig. 3 is shortened by 1/8 and the number of OFDM symbols is increased. In the transmission mode 4, each symbol period shown in Fig. 3 is shortened by 1/2.

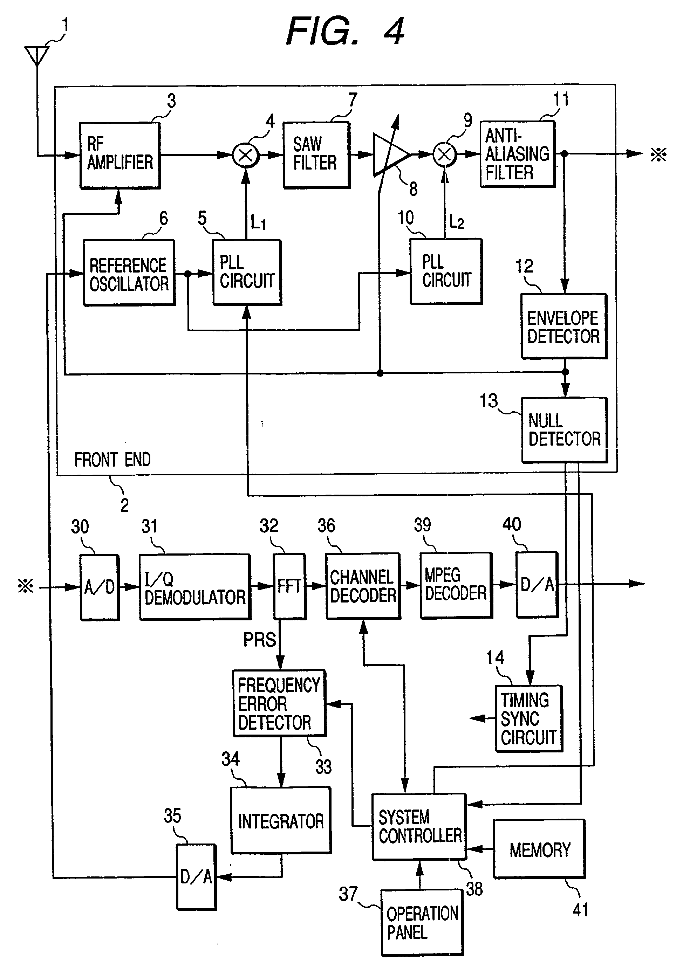

Fig. 4 is a block diagram of a DAB receiver with a seek function.

A DAB broadcast signal (called ensemble) of, for example, in the band II, caught with an antenna 1 is sent to a front end 2, RF-amplified by an RF amplifier 3 capable of changing its gain with an AGC voltage, and mixed at a mixer with a first local oscillation signal $L_1$ input from a PLL circuit 5 to be converted into a first intermediate frequency signal having a center frequency of $f_{IF1}$. The signal $L_1$ output from the PLL circuit 5 has a frequency of $\mathbf{f_1 \cdot (n_1/m_1)}$, where $f_1$ is a frequency of a reference oscillation signal input from a reference oscillator 6, $m_1$ takes a fixed value, and $n_1$ takes a value which is changed by a system controller made of a microcomputer to be described later, $n_1$ being used for changing the tuned frequency at a step of 16 kHz. The reference oscillator 6 is a VCXO which changes its oscillation frequency in accordance with an automatic frequency adjusting control voltage. The first intermediate frequency signal is supplied to a SAW filter (elastic surface wave filter) 7 to limit a pass-band to 1.536 MHz.

An output of the SAW filter 7 is supplied via an AGC amplifier 8 to a mixer 9 whereat it is mixed with a second local oscillation signal $L_2$ input from a PLL circuit 10 to be converted into a second intermediate frequency signal having a center frequency of $f_{IF2}$ ($< f_{IF1}$). The signal $L_2$ output from the PLL circuit 10 has a frequency of $\mathbf{f_1 \cdot (n_2/m_2)}$, where $f_1$ is a frequency of a reference oscillation signal input from the reference oscillator 6, and both $m_2$ and $n_2$ take fixed values. The second intermediate frequency signal is supplied to an anti-aliasing filter 11 to limit a pass-band to 1.536 MHz.

An envelope of the second intermediate frequency signal output from the anti-aliasing filter 11 is detected by an envelope detector 12 and output as the AGC voltage to the RF amplifier 3 and AGC circuit 8 (refer to $\underline{a}$ in Fig. 3). The RF amplifier 3 and AGC circuit 8 lower or increase their gains in accordance with the AGC voltage so that the second intermediate frequency signal having generally a constant level independent from the antenna input level can be obtained. An output of the envelope detector 12 is input to a NULL detector 13 to detect a NULL symbol. The NULL detector 13 shapes the waveform of the NULL symbol (refer to b in Fig. 3), and measures a low level time Td which corresponds to the NULL symbol period. If this low level time is coincident with a NULL symbol length of any transmission mode defined by DAB, the NULL detector 13 outputs a NULL symbol detection signal ND (refer to c in Fig. 3) to a timing sync circuit 14, system controller, and the like, synchronously with the rise timing of the envelope signal. According to the measured time period Td, the NULL detector 13 also outputs a transmission mode detection signal TM which represents the transmission mode (refer to d in Fig. 3. It is assumed that Td = 1.297 ms so that the transmission mode detection signal TM indicates the transmission mode 1).

The timing sync circuit 14 generates various timing signals during an ordinary operation, by receiving carrier-components in the phase reference symbol PRS (effective symbol period) input from an FFT circuit 32 to be described later, calculating a carrier-power, detecting a frame sync from a cepstrum obtained through IFFT of the carrier-power, and outputting this sync detection signal to an unrepresented timing signal generator. However, immediately after the start of ensemble reception, the timing sync circuit 14 detects the frame sync by using the NULL symbol detection signal ND input from the NULL detector, and outputs a sync detection signal.

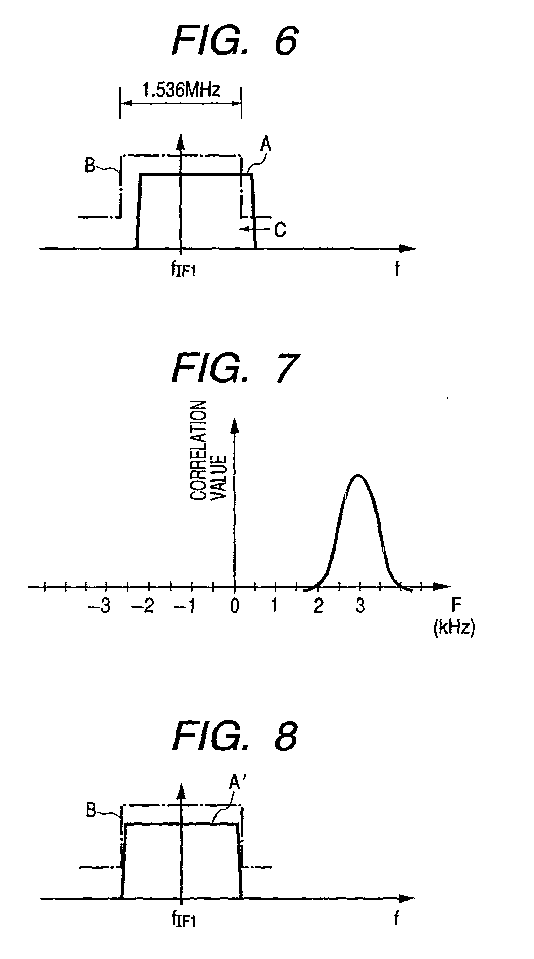

An output of the anti-aliasing filter 11 is A/D converted by an A/D converter 30. An I/Q demodulator 31 demodulates I/Q components to recover the transmission frame signal shown in Fig. 3. The demodulated I/Q components are subject to a FFT process by an FFT circuit 32 constituted of a dedicated processor to thereby derive carrier-components (complex number data representative of an amplitude and phase of each carrier) of each of $n$ carriers constituting an OFDM modulated wave, in the unit of symbol, where n = 1536 for the transmission mode 1, n = 384 for the transmission mode 2, n = 192 for the transmission mode 3, and n = 768 for the transmission mode 4. The FFT circuit 32 outputs the carrier-components during the effective symbol period of PRS to a frequency error detector 33 in response to predetermined timing signals. The frequency error detector 33 comprises a digital signal processor having a decoding software and decodes the carrier-components of PRS through inter-carrier differential demodulation (for PRS, a predetermined fixed code was subject to the inter-carrier differential modulation on the transmission side), and thereafter calculates a correlation function between the decoded carrier-components and a predetermined reference code (e.g., conjugate of CAZAC code). The correlation function is shown in the graph of Fig. 7. A frequency error of the tuned frequency from the DAB broadcast signal is calculated from this correlation function. While AFC is enabled by the system controller, the frequency error detector 33 outputs frequency error data to an integrator 34 (while AFC is disabled, data indicating that the frequency error is zero is output). Data integrated by the integrator 34 is D/A converted by a D/A converter and output to the reference oscillator 6 as the automatic frequency adjusting control voltage. In accordance with this control voltage, the reference oscillator 6 changes its oscillation frequency to thereby change the reference oscillation signal frequency $f_1$ and cancel the frequency error.

The FFT circuit 32 outputs FFT carrier-components (complex number data representative of an amplitude and phase of each carrier) of each symbol (effective symbol period) of S = 2 to 76 to a channel decoder 36. The channel decoder 36 performs frequency deinterleaving, DQPSK symbol demapping, and FIC/MSC separation, and outputs packet data called an FIG (Fast Information Group) to the system controller, the FIG including twelve FIB's (Fast Information Blocks) obtained through error detection/correction (Viterbi decoding) and descrambling of three effective FIC symbols each divided into four.

MSC effective symbols are classified into eighteen symbols to reconfigure four CIF's (Common Interleaved Frames). Each CIF contains a plurality of sub-channels each corresponding to one program.

When a user selects a desired program by using a program select key of an operation panel 37, the system controller 38 performs a predetermined program selection control, and outputs information of designating a sub-channel corresponding to the desired program, by referring to FIC information. The channel decoder 36 derives the sub-channel designated by the system controller 38 from four CIF's, and thereafter performs time deinterleaving, error detection/correction (Viterbi decoding), error count, and descrambling to decode the DAB audio frame data and output it to a MPEG decoder 39.

The MPEG decoder 39 decodes the DAB audio frame data and outputs audio data of two channels. This audio data is D/A converted by a D/A converter 40 and output as an analog audio signal.

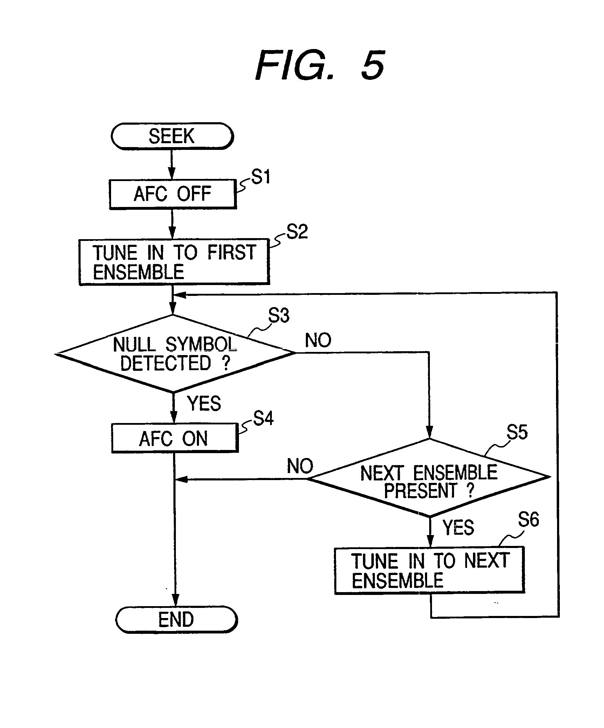

The operation panel 37 is also provided with a seek key. A memory 41 stores therein broadcast frequency data of a plurality of ensembles. When a seek command is given upon depression of the seek key of the operation panel, the system controller 38 performs a seek control. This seek control process will be described with reference to the flow chart of Fig. 5.

Upon reception of a seek command, the system controller 38 supplies an AFC disable command to the frequency error detector 33 to make the latter output data indicating that the frequency error is zero and to fix the oscillation frequency of the reference oscillator 6 (Step S1 in Fig. 5).

Broadcast frequency data of the first ensemble is read from the memory 41, and a corresponding frequency division ratio $n_1$ is set to the PLL circuit 5 to tune in to the first ensemble (Step S2). Next, it is checked whether the NULL symbol detection signal is supplied from the NULL detector 13 (Step S3). If the ensemble is captured at the present reception frequency, an output of the envelope detector 12 lowers at the NULL symbol. The NULL detector 13 shapes the waveform of the output of the envelope detector 12, and outputs the NULL symbol detection signal at the rise timing of the envelope signal. Upon reception of the NULL symbol detection signal, the system controller 36 judges as YES at Step S3. Since there is a DAB broadcast signal at the present reception frequency, the system controller 33 supplies an AFC enable signal to the frequency error detector 33 to thereafter terminate the seek control process (Step S4).

An output of the front end 2 is I/Q demodulated by the I/Q demodulator 31, and is subject to FFT at the FFT circuit 32. The carrier-components of PRS are decoded through inter-carrier differential demodulation by the frequency error detector 33, and thereafter a correlation function between the decoded carrier-dependent components and a predetermined reference code is calculated. An example of this correlation function is shown in the graph of Fig. 7 whose abscissa represents a frequency and ordinate represents a correlation value. In accordance with this correlation function, a frequency error of the tuned frequency from the DAB broadcast signal frequency can be calculated.

If the center of spectrum distribution of a received ensemble relative to the first intermediate frequency is shifted toward a frequency higher than the normal center frequency $f_{IF1}$, as shown by a solid line A in Fig. 6 (one-dot chain line in Fig. 6 indicates the attenuation characteristics of the SAW filter 7), the corresponding correlation function becomes as shown in the graph of Fig. 7. While the AFC enable command is supplied to the frequency error detector 33, it outputs frequency error data representative of the frequency error calculated from the correlation function. This frequency error data is integrated by the integrator 34, D/A converted by the D/A converter 35, and supplied to the reference oscillator 6.

The reference oscillator 6 changes its oscillation frequency in accordance with the supplied control voltage, and changes the first and second local oscillation signals $L_1$ and $L_2$ so as to cancel the frequency error. Therefore, the spectrum distribution of the received ensemble relative to the first intermediate frequency signal shifts to the lower frequency (refer to an arrow C in Fig. 6), and ultimately enters the pass-band of the SAW filter 7 as shown in Fig. 8. It is therefore possible for the channel decoder 36 to correctly recover the information of FIC and MSC. As a user selects a desired program by using the operation panel 37, the system controller 38 instructs the channel decoder 36 to supply the DAB audio frame data of the desired program to the MPEG decoder 39. In this manner, the desired program can be listened.

If NO at Step S3, there is no ensemble capable of being received at the presently tuned frequency, and the system controller 38 checks by referring to the memory 41 whether there is broadcast frequency data of the next ensemble (Step S5). If not, the seek control process is terminated, whereas if present, a corresponding $n_1$ is

set to the PLL circuit 5, and after the new ensemble is tuned in, the above processes are repeated (Step S6).

The DAB receiver with a conventional seek function described above is, however, associated with a problem that the seek control process is terminated if there is an ensemble at a frequency near the tuned frequency, because the attenuation in the cut-off band of the SAW filter 7 is not so large.

Specifically, the frequency spectrum of each ensemble of DAB is rectangular because of the specific nature of an OFDM modulated wave. From this reason, an SAW filter 7 having steep attenuation characteristics is used as the band-elimination filter of the first intermediate frequency signal of the DAB receiver. However, the SAW filter 7 having a large attenuation has a large area which requires a large mount space and results in a high cost. From this reason, a SAW filter 7 having an attenuation of about - 40 dB has been used. A reception sensitivity of a DAB receiver is required to receive an ensemble even if an antennal input is - 90 dBm. In order to realize this, high AGC (automatic gain control) is provided by a plurality of AGC amplification stages.

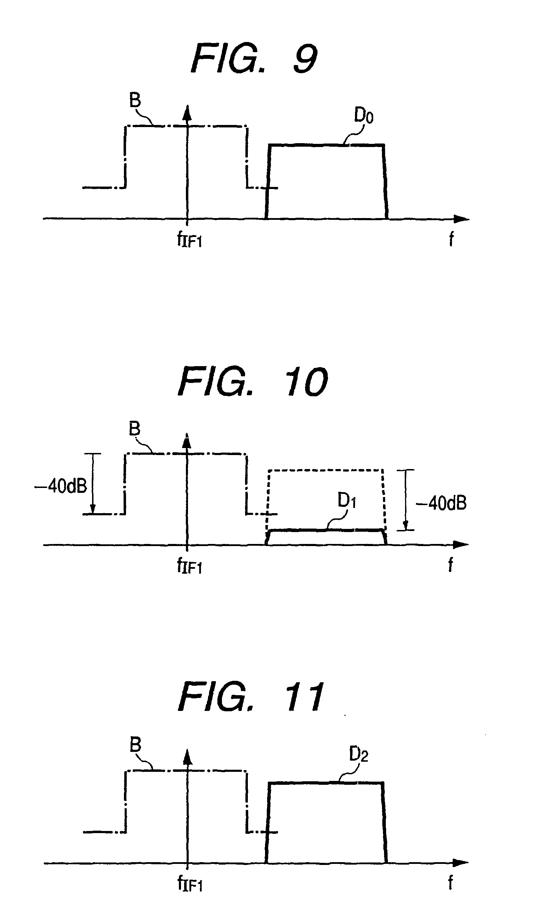

As some reception frequency is tuned in by the front end 2 during the seek control process and if, as shown in Fig. 9, there is another ensemble $D_0$ near at a frequency higher than the pass-band as viewed from the input side of the SAW filter 7 (one-dot chain line B in Fig. 9 indicates the attenuation characteristics of the SAW filter 7), then this other ensemble is attenuated only by - 40 dB by the SAW filter 7 and is leaked to the output side of the SAW filter 7 (refer to $D_1$ in Fig. 10). Although the components of the ensemble $D_0$ are converted into the second intermediate frequency signal and attenuated by the anti-aliasing filter 11, the level thereof is raised greatly by the automatic gain adjusting function of the system including the envelope detector 12 and RF amplifier 3, and AGC amplifier 8 because there is no signal components in the pass-band, and the ensemble becomes as $D_2$ shown in Fig. 11.

In this state, the NULL detector 13 can detect the NULL symbol so that the system controller 38 terminates the seek control operation. However, the ensemble $D_0$ cannot be received normally because the center frequency of the ensemble $D_0$ is away from $f_{IF1}$ by several hundred kHz or more which cannot be covered with the automatic frequency adjusting ability using PRS.

Apart from the above, during a mobile reception, a dip may be formed on the time axis of a TV broadcast signal or the like other than ensembles of a DAB broadcast signal, because of fading phenomenon or the like. Therefore, when some frequency is tuned in during the seek control operation, the NULL detector 13 detects in some case the NULL symbol detection signal although a DAB ensemble is not actually received. Also in such a case, the system controller 38 terminates the seek.

DE 197 21 864 A1 discloses a digital broadcasting receiver. The receiver demodulates a reference phase symbol contained in a broadcast signal, modifies resulting frequency data using different frequency shifts, converts the modified data and determines first and second frequency errors as well as a phase difference error, in order to control the oscillation frequency of a local oscillator. The first frequency error and the phase difference error are corrected by adjusting the oscillation frequency; then the second frequency error is used to correct the phase difference error with respect to its non-unity.

EP-A-0786889 discloses a method for the reception of multi carrier signals and an related apparatus. A special evaluation of correlation values is performed, to reduce significantly the time needed by the receiver to reach a given tuning point with adequate accuracy and to exclude the possibility that there is a system-compliant signal. After said decision, the receiver can go ahead to the next tuning point. If, however, a system-compliant signal has been found - even with an off-set - the multi carrier signal is further decoded in the normal way.

## SUMMARY OF THE INVENTION

It is an object of the present invention to solve the above conventional problems and provide a digital broadcast receiver capable of reliably performing a seek operation of an ensemble.

A digital broadcast receiver according to the present invention comprises reception means for tuning a selected broadcast frequency to receive a digital broadcast signal of an OFDM modulated wave in the tuned broadcast frequency; deriving means for deriving carrier-components from an output of the reception means; program information demodulating means for demodulating information part (FIC, MSC) of the derived carrier-components to recover a program desired by a user; frequency error detecting means for detecting a tuning frequency error by referring to a correlation function calculated from control part (PRS) of the derived carrier-component and a reference code; frequency adjusting means for adjusting the tuning frequency in the reception means to eliminate the detected tuning frequency error; NULL detecting means for detecting a NULL symbol in the output of the reception means; and control means for in response to a seek instruction controlling the reception means to sequentially tune each of broadcast frequencies of the digital broadcast signal in advance stored in a memory and stop the seek operation when the NULL detecting means detects the NULL symbol at one of the sequentially tuned broadcast frequencies and then controlling the frequency adjusting means to conduct the tuning frequency adjustment at said one of broadcast frequency, wherein

the control means judges whether or not the maximum correlation value of the correlation function calculated in the frequency error detection means is larger than a predetermined value, and stops the seek operation only when the maximum correlation value is larger, and continues the seek operation when the maximum correlation value is not larger, even where the null symbol has been detected.

In the above a digital broadcast receiver the control means further judges whether or not the tuning frequency error adjusted by the frequency adjusting means when the seek operation is topped is less than a predetermined value after a preselected time period has elapsed, and resumes the seek operation if the tuning frequency error is not less so that the reception means tunes the next broadcast frequency.

In the above digital broadcast receiver, the control means turns off the tuning frequency adjustment operation by the frequency adjusting means during the seek operation.

## BRIEF DESCRIPTION OF THE DRAWINGS

Fig. 1 is a block diagram of a DAB receiver with a seek function according to an embodiment of the invention.
Fig. 2 is a flow chart illustrating a seek control process to be executed by a system controller shown in Fig. 1.
Fig. 3 is a diagram illustrating the format of a DAB transmission frame signal and an operation of detecting a NULL symbol.
Fig. 4 is a block diagram of a conventional DAB receiver with a seek function.
Fig. 5 is a flow chart illustrating a seek control process to be executed by a system controller shown in Fig. 4.
Fig. 6 is a graph showing a frequency spectrum of an ensemble relative to a first intermediate frequency signal.
Fig. 7 is a graph illustrating an operation of an frequency error detector.
Fig. 8 is a graph showing a frequency spectrum of an ensemble relative to the first intermediate frequency signal.
Fig. 9 is a graph showing a frequency spectrum of an ensemble relative to the first intermediate frequency signal at the input side of an SAW filter.
Fig. 10 is a graph showing a frequency spectrum of an ensemble relative to the first intermediate frequency signal at the output side of the SAW filter.
Fig. 11 is a graph showing a frequency spectrum of an ensemble relative to the first intermediate frequency signal at the output side of an AGC amplifier.

## DETAILED DESCRIPTION OF THE PREFERRED EMBODIMENTS

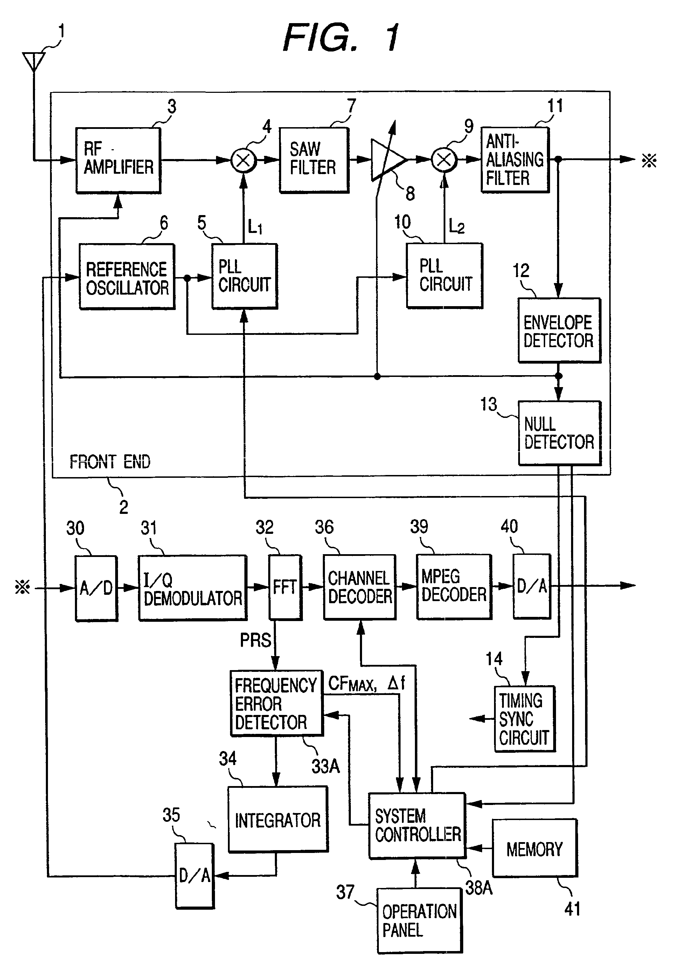

An embodiment of the invention will be described with reference to Fig. 1.

Fig. 1 is a block diagram of a DAB receiver with a seek function according to the embodiment of the invention. In Fig. 1, like elements to those shown in Fig. 4 are represented by using identical reference numerals.

A system controller 38A constituted of a microcomputer performs a predetermined seek control process upon reception of a seek instruction entered by depressing the seek key of an operation panel 37, and performs a predetermined program selection control upon reception of a program selection instruction entered by the program select key. The conditions of terminating the seek control process are that a NULL symbol is detected, that a maximum correlation value of the correlation function calculated between a predetermined reference code and the carrier-independent components of PRS decoded by the frequency error detector 33A is a predetermined value $S_c$ or larger, and that the frequency error becomes a predetermined value or lower in a predetermined period through the automatic frequency adjustment system including an integrator 34, D/A converter 35, reference oscillator 6, and PLL circuits 5 and 10. The value $S_c$ is empirically determined to be a predetermined value as small as possible within a range capable of frequency pull-in by AFC.

The frequency error detector 33A decodes carrier-independent components of PRS, and outputs frequency error data $\Delta f$ and the maximum correlation value $CF_{MAX}$ of the correlation function calculated between the predetermined reference code and the decoded carrier-independent components, to the system controller 38A.

The other structures are quite the same as those shown in Fig. 4.

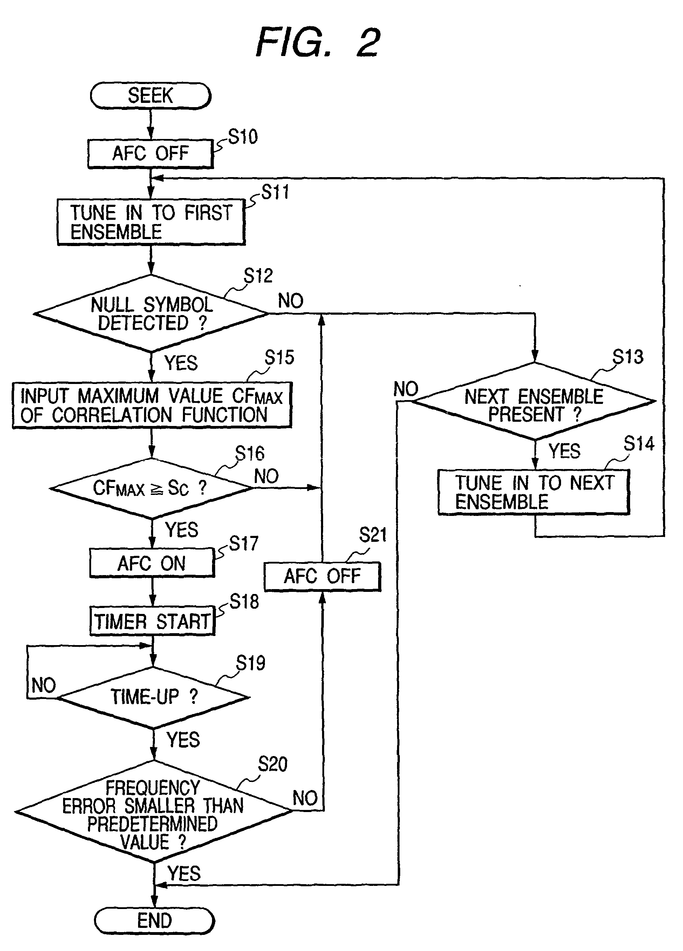

The seek operation of the above embodiment will be described with reference to Fig. 2 which is a flow chart illustrating the seek control process to be executed by the system controller 38A.

It is assumed from the convenience of description that the DAB receiver with the seek function shown in Fig. 1 can receive an ensemble (DAB broadcast signal) of the bands II and III. It is also assumed that the memory 41 stores in advance broadcast frequency data of ten ensembles of the bands II and III, in memory channels CH1 to CH10.

Upon reception of a seek command entered by a user by depressing the seek key of the operation panel 37, the system controller 38A supplies an AFC disable command to the frequency error detector 33A to make the latter output data indicating that the frequency error is zero and to fix the oscillation frequency of the reference oscillator 6 (Step S10 in Fig. 2).

Broadcast frequency data of the first ensemble is read from the memory 41 in the memory channel CH1, and a corresponding $n_1$ is set to a PLL circuit 5 to tune in to the first ensemble (Step S11). Next, it is checked whether the NULL symbol detection signal is supplied from a NULL detector 13 (Step S12). If NO, there is no possibility that the ensemble is received at the present reception frequency. Therefore, broadcast frequency data of the next ensemble stored in the memory 41 in the memory channel CH2 is read, and the corresponding $n_1$ is set to the PLL circuit 5 to tune in to the second ensemble (Steps S13 and S15).

When the ensemble or DAB broadcast signal is captured at the present reception frequency, the front end 2 outputs the second intermediate frequency signal, and an output of the NULL symbol from an envelope detector 12 lowers. The NULL detector 13 shapes the waveform of the output of the envelope detector 12, and measures a low level time Td. If this low level time is coincident with a NULL symbol length of any transmission mode defined by DAB, the NULL detector 13 outputs a NULL symbol detection signal ND synchronously with the rise timing of the envelope signal (refer to Fig. 3). By using the NULL symbol detection signal ND, a timing sync circuit 14 detects a frame sync, and outputs a sync detection signal to an unrepresented timing signal generator which generates various timing signals.

Upon reception of the NULL symbol detection signal ND, the system controller 38A judges as YES at Step S12. However, it is uncertain that the center frequency of the received ensemble is near at the center frequency $f_{IF1}$ of a SAW filter 7 relative to the first intermediate frequency and the frequency pull-in by AFC is possible, or that the center frequency of the received ensemble is away from the center frequency $f_{IF1}$ of the SAW filter 7 relative to the first intermediate frequency and the frequency pull-in by AFC is impossible.

The second intermediate frequency signal output from the front end 2 is A/D converted and thereafter I/Q demodulated by an I/Q demodulator 31 to recover the transmission frame signal shown in Fig. 3. Derived in the unit of symbol from the output of the I/Q demodulator 31 by an FFT circuit 32 are carrier-dependent components of each of n carriers constituting an OFDM modulated wave, where n = 1536 for the transmission mode 1, n = 384 for the transmission mode 2, n = 192 for the transmission mode 3, and n = 768 for the transmission mode 4. The FFT circuit 32 outputs the carrier-dependent components of PRS to a frequency error detector 33A which decodes the carrier-dependent components through inter-carrier differential demodulation, and thereafter calculates a correlation function between the decoded carrier-dependent components and a predetermined reference code. The frequency error detector 33A outputs the maximum correlation value $CF_{MAX}$ of the correlation function to the system controller 38A.

At Steps S15 and S16 after Step S12, the system controller 38A checks whether the maximum correlation value $CF_{MAX}$ supplied from the frequency error detector 33A is equal to or larger than the reference value $S_c$. If the maximum value is smaller than $S_c$, it means either that a dip is formed during a mobile reception on the time axis of a TV broadcast signal or the like other than DAB broadcast signals, because of fading phenomenon or the like, or that an adjacent ensemble unable to perform a frequency pull-in by AFC is erroneously received. Therefore, the flow immediately advances to Step S13 without terminating the seek control process or enabling the AFC. At Step S13, the ensemble corresponding to the next memory channel CH2 is tuned in (Step S14) to repeat the above processes.

In this manner, a seek can be speeded up and performed correctly, without a wasteful frequency pull-in operation.

Conversely, if the maximum correlation value $CF_{MAX}$ is equal to or larger than the reference value Sc, it is judged that the present NULL symbol detection was realized by the reception of an ensemble and that a possibility of frequency pull-in by AFC is high. In this case, the AFC enable command is supplied to the frequency error detector 33A (Step S17) and a timer for counting up a predetermined time is made to start counting (Step S18).

Upon reception of the AFC enable command, each time the carrier-independent components of PRS are received the frequency error detector 33A decodes the carrier-dependent components through inter-carrier differential demodulation, and thereafter calculates a correlation function between the decoded carrier-dependent components and a predetermined reference code. In accordance with the calculated correlation function, a frequency error is calculated and the calculated frequency error data is output to an integrator 34. The frequency error data is integrated by the integrator 34, D/A converted by a D/A converter 35, and output as an automatic frequency adjusting control voltage to the reference oscillator 6. The reference oscillator 6 changes its oscillation frequency $f_1$ with this control voltage to change the frequencies of the first and second local oscillation signals $L_1$ and $L_2$ to cancel the frequency error.

If the center frequency of the received ensemble is originally away from the center frequency $f_{IF1}$ of the SAW filter 7 relative to the first intermediate frequency and the frequency pull-in by AFC is impossible, then the frequency error does not become small even if a time lapses after the AFC enable command and the ensemble cannot be received correctly. If the detection of the NULL symbol is originated not from an ensemble but from a dip formed during a mobile reception on the time axis of a TV broadcast signal or the like other than DAB broadcast signals, because of fading phenomenon or the like and if the maximum correlation value accidentally becomes equal to or higher than the reference value $S_c$, the frequency error does not become small even if a time lapses after the AFC enable command.

When the timer counts up the predetermined time, the system controller checks whether the current frequency error data $\Delta f$ fetched from the frequency error detector 33A has converged into a predetermined value or lower (Steps S19 and S20). If NO, it is judged that the maximum correlation value has exceeded the reference value from some unknown reason irrespective of that the frequency pull-in is essentially impossible. Then, the system controller 38A supplies the AFC disable command to the frequency error detector 33A to thereby make the integrator 34 to output the data indicating that the frequency error is zero (Step S21) to follow Step S13 whereat the ensemble corresponding to the next memory channel CH2 is tuned in (Step S14) to repeat the above processes.

In this manner, a seek can be speeded up and performed correctly, without a wasteful frequency pull-in operation.

On the contrary to the above, if the center frequency of the received ensemble is originally near at the center frequency $f_{IF1}$ of the SAW filter 7 relative to the first intermediate frequency and the frequency pull-in by AFC is possible, then the AFC operates normally and the frequency error converges to zero as a time lapses. In this case, Step S20 is YES and the program of the ensemble can be listened normally so that the seek operation is terminated.

A channel decoder 36 recovers information of FIC and MSC from the carrier-independent components of each symbol input from the FFT circuit 32. When a user selects a desired program by using the operation panel 37, the system controller 38A instructs the channel decoder 36 to output the DAB audio frame data of the desired program to a MPEG decoder 39. In this manner, the desired program can be listened.

In this embodiment, when the NULL symbol is detected at some frequency of an ensemble during the seek operation and if the maximum correlation value of a correlation function calculated by the frequency error detector 33A is judged as not to be equal to or higher than the predetermined value, then it is judged that there is a nearby ensemble on the frequency axis or that a dip formed because of fading phenomenon or the like during a mobile reception on the time axis of a TV broadcast signal or the like was erroneously detected as the NULL symbol. In this case, the seek operation is not terminated but another ensemble is sought. It is therefore possible to correctly and quickly receive an ensemble which allows to listen to a program.

Even if the maximum correlation value of a correlation function calculated by the frequency error detector 33A is equal to or higher than the predetermined value, it is judged whether the frequency error is converged by AFT to a predetermined value or lower in a predetermined time. If not, it is judged that there is a nearby ensemble on the frequency axis or that a dip formed because of fading phenomenon or the like during a mobile reception on the time axis of a TV broadcast signal or the like was erroneously detected as the NULL symbol, and also judged that the maximum correlation value of the correlation function has exceeded the predetermined value from some unknown reason. In this case, the seek operation is not terminated but another ensemble is sought. It is therefore possible to correctly and quickly receive an ensemble which allows to listen to a program.

In the above-described embodiment and modifications, DAB broadcasting in Europe is used. The invention is not limited only to the DAB broadcasting, but is also applicable to other broadcasting and communications such as digital ground wave TV broadcasting and digital satellite broadcasting.

According to the invention, when the NULL symbol is detected at some reception frequency of a digital broadcast station during the seek operation, it is judged whether the maximum correlation value of a correlation function calculated by the frequency error detector is equal to or higher than the predetermined value. Only when the maximum correlation value is equal to or higher than the predetermined value, the seek operation is terminated. It is therefore possible to correctly receive a digital broadcast which allows to listen to a program.

## Claims

1. A digital broadcast receiver including: reception means (3-11) for receiving a digital broadcast signal of an OFDM modulated wave in the tuned broadcast frequency; deriving means (30-32) for deriving carrier-components from an output of the reception means; program information demodulating means (36-40) for demodulating information part (FIC, MSC) of the derived carrier-components to recover a program desired by a user; frequency error detecting means (33A) for detecting a tuning frequency error by referring to a correlation function calculated from control part (PRS) of the derived carrier-component and a reference code; frequency adjusting means (34, 35) for adjusting the tuning frequency in the reception means to eliminate the detected tuning frequency error; NULL detecting means for detecting a NULL symbol in the received signal;

and control means (38A) for in response to a seek instruction controlling the reception means, and for judging whether or not the maximum correlation value ($CF_{MAX}$) of the correlation function calculated in the frequency error detection means is larger than a predetermined value (Sc), and stopping the seek operation when the maximum correlation value is larger,

**characterized in that**

the control means controls the reception means to sequentially tune each of broadcast frequencies of the digital broadcast signal in advance stored in a memory, and stop the seek operation when the NULL detecting means detects the NULL symbol at one of the sequentially tuned broadcast frequencies and then controlling the frequency adjusting means to conduct the tuning frequency adjustment at said one of broadcast frequency, and **in that** it continues the seek operation when the maximum correlation value is not larger than the predetermined value (Sc), even where the NULL symbol has been detected.

## Patentansprüche

1. Digitalrundfunkempfänger, beinhaltend: eine Empfangseinrichtung (3-11), welche ein digitales Rundfunksignal aus einer OFDM-modulierten Welle in der eingestellten Rundfunkfrequenz empfängt; eine Ableitungseinrichtung (30-32), welche Trägerkomponenten aus einem Ausgangssignal der Empfangseinrichtung ableitet; eine Programminformations-Demodulationseinrichtung (36-40), welche einen Informationsteil (FIC, MSC) der abgeleiteten Trägerkomponenten demoduliert, um ein von einem Benutzer gewünschtes Programm wiederzugewinnen; eine Frequenzfehler-Detektionseinrichtung (33A), welche einen Einstellungsfrequenzfehler detektiert durch Bezugnehmen auf eine Korrelationsfunktion, die sich aus einem Kontrollteil (PRS) der abgeleiteten Trägerkomponente und einem Referenzcode berechnet; eine Frequenzregelungseinrichtung (34, 35), welche die Einstellungsfrequenz in der Empfangseinrichtung regelt, um den detektierten Einstellungsfrequenzfehler zu beseitigen; eine NULL-Detektionseinrichtung, welche ein NULL-Symbol im empfangenen Signal detektiert;

und eine Steuerungseinrichtung (38A), welche in Reaktion auf eine Suchanweisung die Empfangseinrichtung steuert, und welche beurteilt, ob der maximale Korrelationswert ($CF_{MAX}$) der Korrelationsfunktion, berechnet in der Frequenzfehler-Detektionseinrichtung, größer als ein vorbestimmter Wert (Sc) ist oder nicht, und welche den Suchvorgang anhält, wenn der maximale Korrelationswert größer ist,

**dadurch gekennzeichnet, dass**

die Steuerungseinrichtung die Empfangseinrichtung steuert, um jede von vorab in einem Speicher gespeicherten Rundfunkfrequenzen des digitalen Rundfunksignals sequenziell einzustellen, und den Suchvorgang anzuhalten, wenn die NULL-Detektionseinrichtung das NULL-Symbol bei einer der sequenziell eingestellten Rundfunkfrequenzen detektiert, und dann die Frequenzregelungseinrichtung steuert, um die Einstellungsfrequenzregelung bei der einen der Rundfunkfrequenzen vorzunehmen, und dass sie den Suchvorgang fortsetzt, wenn der maximale Korrelationswert nicht größer ist als der vorbestimmte Wert (Sc), und zwar selbst dort, wo das NULL-Symbol detektiert worden ist.

## Revendications

1. Récepteur de diffusion numérique comportant : des moyens de réception (3-11) destiné à recevoir un signal de diffusion numérique d'une onde modulée par OFDM dans la fréquence de diffusion accordée ; des moyens de dérivation (30-32) destinés à dériver les composantes de la porteuse à partir d'une sortie des moyens de réception ; des moyens de démodulation des informations de programme (36-40) destinés à démoduler la partie d'information (FIC, MSC) des composantes de la porteuse dérivées afin de récupérer un programme choisi par un utilisateur ; un moyen de détection d'erreur de fréquence (33A) destiné à détecter une erreur de fréquence d'accord en se référant à une fonction de corrélation calculée à partir d'une partie de commande (PRS) de la composante de porteuse dérivée et d'un code de référence ; des moyens de réglage de la fréquence (34, 35) destinés à régler la fréquence d'accord des moyens de réception afin d'éliminer l'erreur de fréquence d'accord détectée ; un moyen de détection NULL destiné à détecter un symbole NULL dans le signal reçu ;

et un moyen de commande (38A) destiné, en réponse à une instruction de recherche, à commander les moyens de réception, et à juger si oui ou non la valeur de corrélation maximale ($CF_{MAX}$) de la fonction de corrélation calculée par le moyen de détection d'erreur de fréquence dépasse une valeur prédéterminée (Sc), et à interrompre l'opération de recherche lorsque la valeur de corrélation maximale la dépasse,

**caractérisé en ce que**

le moyen de commande ordonne aux moyens de réception d'accorder successivement chacune des fréquences de diffusion du signal de diffusion numérique préalablement stockées dans une mémoire, et d'interrompre l'opération de recherche lorsque le moyen de détection NULL détecte le symbole NULL à l'une des fréquences de diffusion successivement accordées puis ordonne aux moyens de réglage de la fréquence de conduire le réglage de la fréquence d'accord à ladite une des fréquences de diffusion, et **en ce qu'**il continue l'opération de recherche lorsque la valeur de corrélation maximale ne dépasse pas la valeur prédéterminée (Sc), même lorsque le symbole NULL a été détecté.

# FIG. 1

# FIG. 2

SEEK

AFC OFF — S10

TUNE IN TO FIRST ENSEMBLE — S11

NULL SYMBOL DETECTED ? — S12

NO

YES

INPUT MAXIMUM VALUE CF$_{MAX}$ OF CORRELATION FUNCTION — S15

$CF_{MAX} \geqq Sc$ ? — S16

NO

YES

AFC ON — S17

TIMER START — S18

NO

TIME-UP ? — S19

YES

FREQUENCY ERROR SMALLER THAN PREDETERMINED VALUE ? — S20

NO

YES

AFC OFF — S21

NEXT ENSEMBLE PRESENT ? — S13

NO

YES

TUNE IN TO NEXT ENSEMBLE — S14

END

## FIG. 3

ONE TRANSMISSION FRAME (TRANSMISSION MODE 1)

96ms

| Sync | FIC | | MSC | | |
|---|---|---|---|---|---|

| NULL (TII) | S=1 | 2 | 3 | 4 | 5 | ------------------------------------ | 75 | 76 |
|---|---|---|---|---|---|---|---|---|

1.297ms    1.246ms
PRS

0.246ms
GUARD
INTERVAL

1ms
EFFECTIVE
SYMBOL
PERIOD

OFDM
SYMBOL

a      OUTPUT a OF ENVELOPE DETECTOR

b      SHAPED WAVEFORM OF a

Td

c      NULL SYMBOL DETECTION SIGNAL ND

d    TM=1    TRANSMISSION MODE DETECTION SIGNAL TM

EP 0 944 213 B1

# FIG. 4

# FIG. 5

```
        ( SEEK )
           │
           ▼
    ┌──────────────┐  S1
    │   AFC  OFF   │
    └──────────────┘
           │
           ▼
    ┌──────────────┐  S2
    │ TUNE IN TO FIRST │
    │ ENSEMBLE     │
    └──────────────┘
           │
           ▼
         S3
      ╱NULL SYMBOL╲ ──── NO ────┐
      ╲ DETECTED ? ╱             │
           │                     │
          YES                    ▼
           │                   S5
    ┌──────────────┐  S4   ╱NEXT ENSEMBLE╲
    │   AFC  ON    │   ◄─NO─╲ PRESENT ?  ╱
    └──────────────┘        │
           │               YES
           │                │
           │         ┌──────────────┐  S6
           │         │ TUNE IN TO NEXT │
           │         │ ENSEMBLE     │
           │         └──────────────┘
           ▼
        ( END )
```

## FIG. 6

## FIG. 7

## FIG. 8

# FIG. 9

B

$D_0$

$f_{IF1}$

f

# FIG. 10

B

−40dB

$D_1$

−40dB

$f_{IF1}$

f

# FIG. 11

B

$D_2$

$f_{IF1}$

f

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19721864 A1

- EP 0786889 A